# EUROPÄISCHE PATENTSCHRIFT

(11) **EP 2 611 554 B1**
(45) Veröffentlichungstag und Bekanntmachung des Hinweises auf die Patenterteilung: **26.08.2015**
(21) Anmeldenummer: 11764674.5
(22) Anmeldetag: 30.08.2011
(51) Int. Cl.: B21D 3/10, B21D 43/00, B23B 31/12

(54) **GREIFKOPF FÜR ERFASSUNGSEINRICHTUNGEN ZUM MANIPULIEREN VON LANGEN WERKSTÜCKEN, ZU- UND ABFÜHRVORRICHTUNG FÜR LANGE WERKSTÜCKE IN EINE UND AUS EINER BEARBEITUNGSMASCHINE SOWIE VERFAHREN ZUM BIEGERICHTEN VON LANGEN WERKSTÜCKEN**
GRIPPER HEAD FOR GRIPPING ARRANGEMENTS FOR MANIPULATING LONG WORKPIECES, DEVICE FOR FEEDING LONG WORKPIECES INTO AND REMOVING SAME FROM A PROCESSING MACHINE AND METHOD FOR BEND-STRAIGHTENING LONG WORKPIECES
TÊTE DE PRISE POUR DISPOSITIFS DE PRISE POUR LA MANIPULATION DE PIÈCES ALLONGÉES, DISPOSITIF D'AMENÉE ET D'ÉVACUATION DE PIÈCES ALLONGÉES EN DIRECTION ET HORS D'UNE MACHINE D'USINAGE, ET PROCÉDÉ DE REDRESSAGE PAR CINTRAGE DE PIÈCES ALLONGÉES

(30) Priorität: 30.08.2010 DE 202010011975 U
(43) Veröffentlichungstag der Anmeldung: 10.07.2013
(73) Patentinhaber: M A E Maschinen- und Apparatebau Götzen GmbH, 40699 Erkrath (DE)
(72) Erfinder: MITZE, Manfred, 58300 Wetter (DE)
(74) Vertreter: Grosse Schumacher Knauer von Hirschhausen
(86) Internationale Anmeldenummer: PCT/EP2011/004360
(87) Internationale Veröffentlichungsnummer: WO 2012/028297

(56) Entgegenhaltungen:
- BE-A- 383 151
- DE-A1- 2 207 336
- DE-A1- 4 022 951
- DE-C1- 10 144 135
- JP-A- 57 001 520
- US-A- 5 980 191

## Beschreibung

### GEBIET DER ERFINDUNG

Die Erfindung betrifft einen Greifkopf mit den Merkmalen des Oberbegriffs des Anspruchs 1; eine Zu- und Abführvorrichtung für lange Werkstücke in eine und aus einer Bearbeitungsmaschine mit den Merkmalen des Oberbegriffs des Anspruchs 10 oder 11 sowie ein Verfahren zum Biegerichten von langen Werkstücken mit den Merkmalen des Oberbegriffs des Anspruchs 12.

### TECHNOLOGISCHER HINTERGRUND

Vorrichtungen und/oder Verfahren zum insbesondere linearen, d.h. horizontalen oder vertikalen Bewegen von Werkstücken in Bearbeitungsmaschinen können der DE 101 14 263 C1, der DE 36 01 075 C1, der DE 22 07 336 A1 und der DE 38 34 546 A1 entnommen werden.

Biegerichtmaschinen, bei denen ein langes Werkstück, zumindest zwischen den Biegerichtschritten in unterschiedlichen Werkstückpositionen, nur an seinen Enden vertikal unterstützt wird, sind aus der DE 101 44 135 C1 und der DE 40 22 951 A1 bekannt. Hierzu dient je eine einen Greifkopf aufweisende Erfassungseinrichtung, die auch ein Drehen des Werkstücks um seine Längsachse ermöglicht und welche eine Bearbeitungsstrecke in der Richtpresse definieren. Die Richtpresse ist längs des nur an seinen Enden abgestützten Werkstücks in die jeweils gewünschten Biegerichtpositionen verfahrbar. Zum Erfassen unterschiedlich langer Werkstücke sind die Erfassungseinrichtungen entlang der Bearbeitungsstrecke abstandsveränderlich. Das zu bearbeitende Werkstück kann grundsätzlich mittels einer Kraneinrichtung in seine Auflager auf den Erfassungseinrichtungen eingelegt werden. Dieser arbeitsintensive Beschickungsvorgang der Biegerichtmaschine kann vereinfacht werden, indem die Erfassungseinrichtungen Schwenkmittel aufweisen, die es gestatten, ein neben der Bearbeitungsstrecke und parallel zu dieser bereit liegendes Werkstück zu erfassen und in einem etwa 180 Grad-Schwenkschritt von der Zuförderposition quer zu seiner Längsrichtung in die Bearbeitungsstrecke der Biegerichtmaschine hinein zu verschenken. Derzeit gebräuchlich ist die radiale Zufuhr mit Hubbalken oder ähnlichem. Die letztgenannten Biegerichtmaschinen von denen die Erfindung ausgeht, werden von der Anmelderin als Baureihe ASV-L vertrieben. Der Biegerichtvorgang erfolgt automatisch über die gesamte Werkstücklänge und mit hoher Präzision.

### DARSTELLUNG DER ERFINDUNG

Um das Manipulieren, insbesondere Zu - und Abführen sowie ggf. auch das Wenden von langen Werkstücken in einer Produktions- und/oder Bearbeitungsstraße, die insbesondere auch eine Biegerichtmaschine für lange Werkstücke umfassen kann, zu vereinfachen und insbesondere die Richtanlage in eine durchlaufende Linienfertigung integrieren zu können, wird ein Greifkopf mit den Merkmalen des Anspruchs 1 vorgeschlagen. Demnach ist vorgesehen, dass der Greifkopf zwei voneinander unabhängig verstellbare, um ein Drehzentrum des Greifkopfes drehbare Spannbacken aufweist. Das Drehzentrum des Greifkopfes liegt innerhalb des Greifkopfes und fällt idealerweise mit einer Mittelpunktsachse des Werkstücks zusammen. Damit wird es u. A. möglich, ein auf einem Horizontalfördermittel, wie einem Rollgang, in seiner Längsrichtung heran gefördertes langes Werkstück unabhängig von seinem Querschnitt in gerader Verlängerung einer Bearbeitungsstrecke zuzuführen. Der Greifkopf kann hierzu ein kraftschlüssiges Ergreifen eines Endbereiches des von dem Horizontalfördermittel herbei geförderten langen Werkstücks gestatten. Ferner kann vorgesehen sein, das ungerichtete Werkstück mittels des Greifkopfes und eines Antriebsmittels in die Bearbeitungsstrecke hereinzuziehen. Zum Abführen des langen Werkstücks aus der Biegerichtmaschine kann der Greifkopf das gerichtete Werkstück auf dasselbe oder ein gegenüberliegendes Horizontalfördermittel in gerader Verlängerung der Bearbeitungsstrecke hinaus schieben. Dementsprechend kann zumindest eine der Erfassungseinrichtungen praktisch entlang der gesamten Bearbeitungsstrecke samt des von seinem Greifkopf festgehaltenen langen Werkstücks entlang der Bearbeitungsstrecke verfahrbar sein. Der Greifkopf ist bevorzugt innen durchgehend offen gestaltet. Er ist bevorzugt umfangsseitig geschlossen. Dies erlaubt es, das Werkstück durch ihn auf seiner ganzen Länge hindurchzuführen. Die Anordnung und Dimensionierung des Greifkopfes ist vorzugsweise so gewählt, dass er durch ein Pressengestell hindurch, insbesondere entlang der Bearbeitungsstrecke verfahren werden kann.

Wie bereits bei den bekannten Biegerichtmaschinen der Baureihe ASV-L von MAE, können die beiden Erfassungseinrichtungen für die Werkstückenden höhenveränderlich sein, um das Werkstück in seinen verschiedenen Biegerichtpositionen jeweils auf die Ambosse der Biegerichtmaschinen abzusenken. Grundsätzlich können stattdessen aber auch die Richtambosse zum Unterstützen des langen Werkstückes angehoben und zwischen den Biegerichtschritten während des Längsverfahrens der Biegerichtmaschine entlang der Bearbeitungsstrecke abgesenkt bleiben. Wie schon in der DE 101 44 135 C1 und der Baureihe ASV-L von MAE vorgesehen, wird das Werkstück von den beiden Erfassungseinrichtungen unabhängig von seiner Länge jeweils an den Enden erfasst, abgestützt und in jede gewünschte Drehposition um die Längsrichtung des Werkstücks gedreht.

Gegenstand der Erfindung ist auch die Zu- und Abführvorrichtung für lange Werkstücke in eine Bearbeitungsmaschine, sowie ein Verfahren zur durchlaufenden Linienfertigung bzw. Bearbeitung langer Werkstücke nach Ansprüchen 10 oder 11, welche jeweils von eigenständig erfinderischer Bedeutung sind.

Während gemäß der Zu- und Abführvorrichtung für lange Werkstücke nach einer ersten Ausführungsform vorgesehen ist, den Horizontaltransport des langen Werkstücks innerhalb der Bearbeitungsstrecke durch Antriebsmittel zur Horizontalbewegung des Greifkopfes zu ermöglichen, sieht eine alternative Ausführungsform (nach Anspruch 11 vor) zwischen den beiden Fassungseinrichtungen angeordnete Rollenböcke vorzusehen, die parallel zu den Erfassungseinrichtungen und mithin entlang der Bearbeitungsstrecke verfahrbar sind. Die Rollenböcke weisen Horizontalstützmittel, wie einem Rollgang entsprechende Rollen auf, die wahlweise unter die Bearbeitungsstrecke derart verlagerbar sind, dass sie das lange Werkstück zumindest während dessen Zu- und Abführen in die und aus der Bearbeitungsstrecke zu unterstützen. Während der Bearbeitungsschritte für das lange Werkstück sind die Horizontalstützmittel quer zur Bearbeitungsstrecke zurückverlagerbar in eine Position in der sie die Bearbeitungsmaschine nicht behindern. Die Vortriebsbewegung des Werkstücks kann entweder durch Drehantriebe an den Rollen oder alternativ wiederum durch den Greifkopf erfolgen.

Ein Greifkopf, der auch das Handling von langen Werkstücken mit nicht runden Querschnitt gestattet, sowie deren automatisches Biegerichten ermöglicht und der ebenfalls von eigenständig erfinderischer Bedeutung ist, ergibt sich aus Ansprüchen 3, 4, 5 und 8. Die Vorrichtungen sind geeignet, Werkstücke unterschiedlicher Längen zu bearbeiten, wobei Längendifferenzen zwischen 3 m und 40 m, insbesondere zwischen 4 m und 30 m möglich sind.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - ein Ausführungsbeispiel einer Biegerichtmaschine, eine Zu- und Abführeinrichtung sowie ein Greifkopf dargestellt sind. Auch einzelne Merkmale der Ansprüche oder der Ausführungsformen können mit anderen Merkmalen anderer Ansprüche und Ausführungsformen kombiniert werden.

### FIGURENKURZBESCHREIBUNG

In der Zeichnung zeigen
- Fig. 1: eine Biegerichtmaschine in Seitenansicht ohne Werkstück;
- Fig. 2 A/B: dieselbe Biegerichtmaschine in einer Zuförderposition (Fig. 2A) und in der Werkstückgreifposition (Fig. 2B);
- Fig. 3 A-E: dieselbe Biegerichtmaschine mit einem Werkstück in seiner Biegerichtposition: vor dem Schließen des zweiten Greifkopfes (Fig. 3A), mit beiden Greifköpfen geschlossen (Fig. 3B), mit geöffnetem zweiten Greifkopf (Fig.3C) sowie in Aussicht von oben (Fig. 3D) und während des Abführens des langen Werkstücks (Fig. 3E);
- Fig. 4 A-E: eine alternative Ausführungsform einer Bearbeitungsstation für lange Werkstücke als Sequenz in Ansicht von oben;
- Fig. 5: eine optionale Erfassungseinrichtung für eine Biegerichtmaschine nach Figuren 1 bis 4;
- Fig. 6: eine alternative Erfassungseinrichtung für die Linienbearbeitung von langen Werkstücken;
- Fig. 7A-C: von der Erfassungseinrichtung nach Figur 6 den Greifkopf in Stirnseitenansicht zur Bearbeitung länglicher Werkstücke unterschiedlicher Querschnittsformen;
- Fig. 8: eine alternative Bauart (O-Form) einer Biegerichtmaschine in stirnseitiger, schematischer Darstellung; sowie
- Fig. 9: eine Aufsicht auf eine seitlich offene Biegerichtmaschine (C-Form) in stark vereinfachter, schematischer Darstellung.

### DETAILLIERTE BESCHREIBUNG VON AUSFÜHRUNGSBEISPIELEN

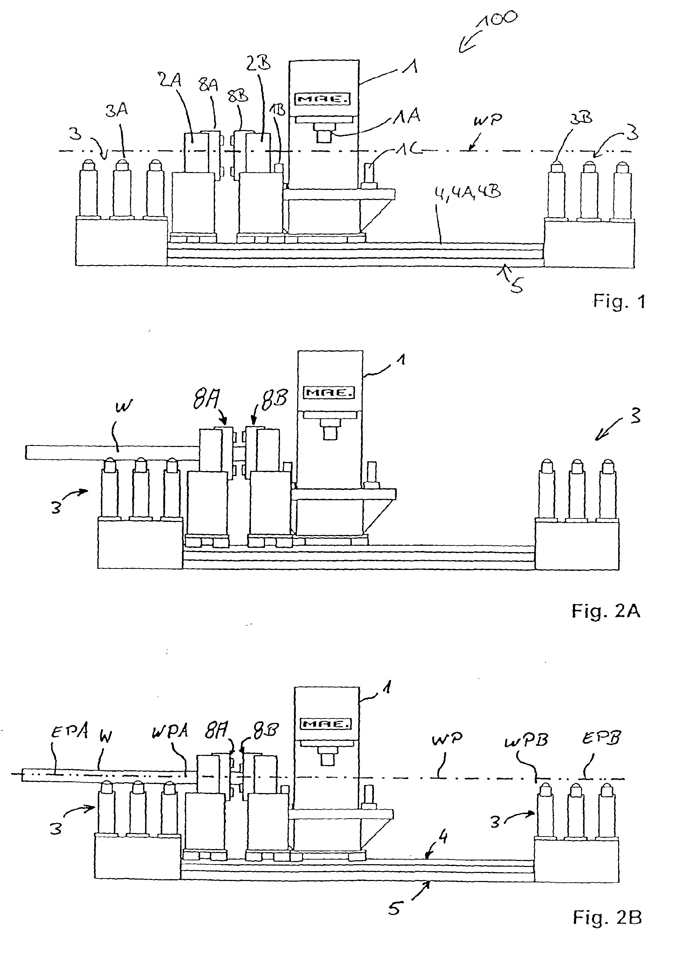

Wie aus Figur 1 ersichtlich umfasst eine insgesamt mit 100 bezeichnete Biegerichtmaschine ein horizontal entlang von Führungsschienen 4, 4A , 4B verfahrbares Pressengestell 1 mit vertikal wirkendem Richtkopf 1A und abstandsveränderlichen vertikal wirkenden Richtambossen 1B, 1C. Zwei Erfassungseinrichtungen 2A, 2B sind, wie das Pressengestell 1, entlang der Führungsschienen 4, 4B einer Maschinenbasis 5 motorgetrieben längs verschieblich. Alternativ kann vorgesehen sein, dass das Pressengestell 1 stationär angeordnet ist, was in den Figuren nicht dargestellt ist.

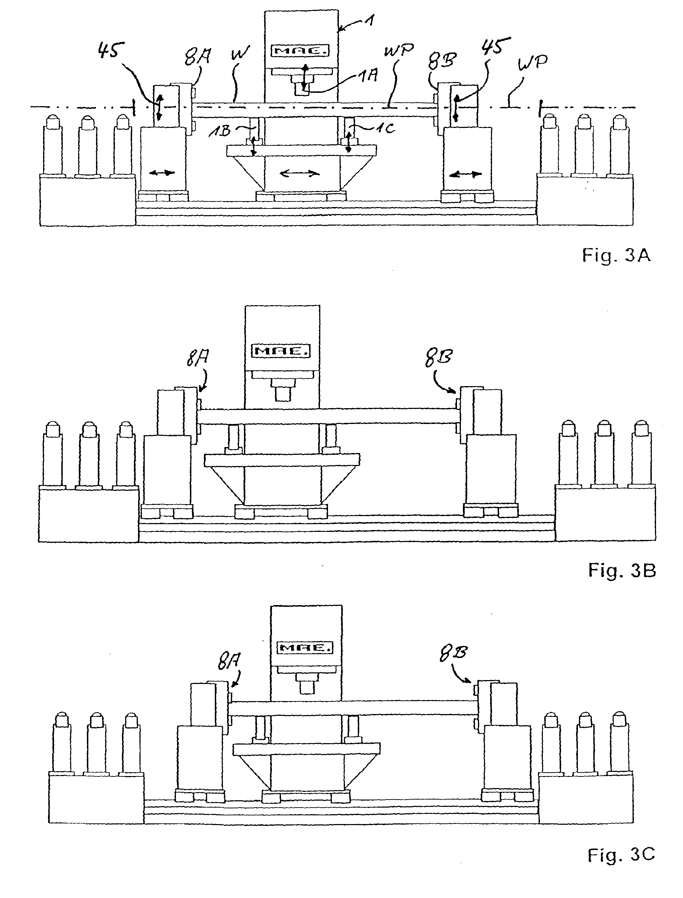

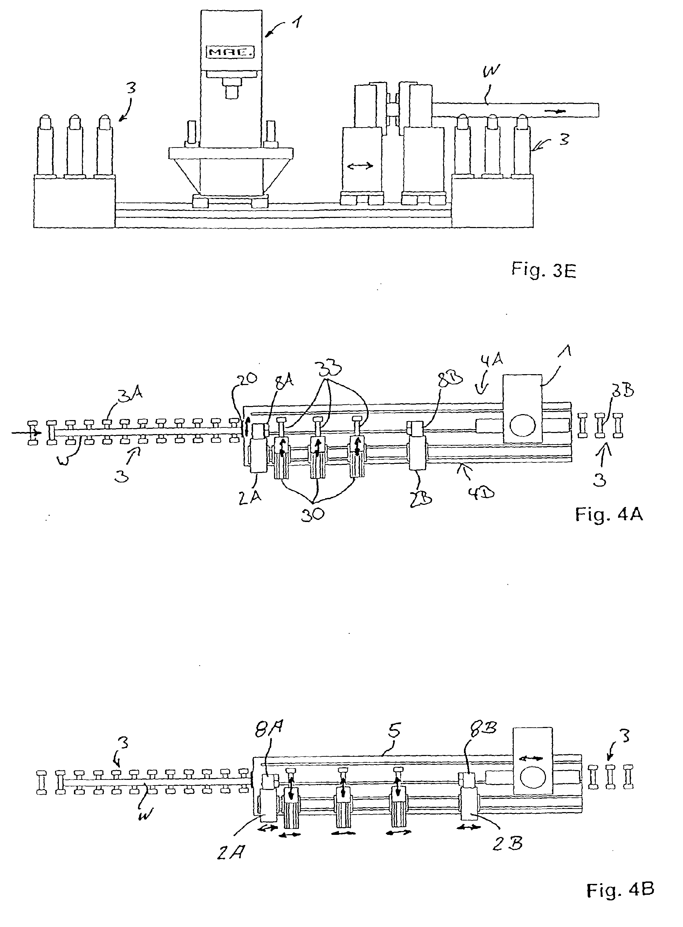

Die Erfassungseinrichtungen 2A und 2B definieren, zusammen mit dem Richtkopf 1 A und den Richtambossen 1B und 1C eine - strichpunktiert dargestellte - Bearbeitungsstrecke WP welche mit dem zur Bearbeitung eingespannten Werkstück W zusammenfällt (Figur 3A-C). Dementsprechend ist die von dem Richtkopf 1A und den Richtambossen 1B, 1C definierte Bearbeitungszone eine Teilstrecke der Bearbeitungsstrecke WP. Durch die Verfahrbarkeit des Pressengestells 1 entlang der Bearbeitungsstrecke WP und der dazu parallelen Führungsschienen 4, 4A, 4B können sich die Biegerichtzonen entlang der Bearbeitungsstrecke entsprechend verlagern. Die Bearbeitungsstrecke WP geht (definitionsgemäß) ganz oder teilweise auch durch die an den Erfassungseinrichtungen 2A und 2B vorgesehenen und im Übrigen weiter unten noch näher beschriebenen Greifköpfe 8A, 8B zum Abstützen und zum Drehantrieb des horizontal angeordneten Werkstücks W. Mithin ist die Bearbeitungsstrecke WP mindestens so lang wie das längstmögliche in der Biegerichtmaschine bearbeitbare Werkstück W samt der Länge der Greifköpfe.

Um unmittelbar am Werkstückende vorhandene Verformungen zu richten, ist es natürlich auch möglich, die Richtpresse über den Greifkopf hinaus zu fahren und den/die Richtambosse unter das aus dem Greifkopf herausragende Werkstückende zu fahren.

In linker und rechter Verlängerung EPA und EPB der Bearbeitungsstrecke WP erstreckt sich an mindestens einem Kopfende WPA und/oder WPB der Bearbeitungsstrecke WP je ein Horizontalfördermittel 3, wie vor allem aus Figuren 1 bis 4 ersichtlich, z. B. als Rollgang 3A, 3B. Ebenso kann ein Horizontalfördermittel 3 sich auch nur in einer der beiden Verlängerungen EPA oder EPB erstrecken (nicht dargestellt).

In der in Figur 2A/B dargestellten Grundposition der Erfassungseinrichtungen 2A, 2B befinden sich die Greifzonen der Greifköpfe 8A, 8B mit ihrem Zentrum, insbesondere mit ihrem Drehzentrum, etwa im Zentrum des Werkstücks W. Aufgrund der Höhenveränderbarkeit der Erfassungseinrichtungen, die zum Beispiel durch eine Höhenveränderbarkeit der Greifköpfe realisiert werden kann, wird der Greifkopf entsprechend der Dicke des Werkstücks W in seiner Höhe eingestellt oder voreingestellt und somit der Greifkopf an die Höhe des Werkstückzentrums relativ zum Rollgang 3A, 3B angepasst. Grundsätzlich können auch die Horizontalfördermittel 3 in ihrer Höhe angepasst werden. Wie aus Figur 2A/B ersichtlich, wird das Werkstücks W beim Vorschieben in Richtung auf die Bearbeitungsstrecke WP über das Ende des Rollgangs 3A hinaus bewegt, so dass es bezüglich des Rollgangs auskragt. Dabei wird das rechte Werkstückende durch den Greifkopf 8A der in der Zeichnung linken Erfassungseinrichtung 2A hindurch bis in die Greifzone des Greifkopfes 8B in der rechten Erfassungseinrichtung 2B vorgeschoben. Daraufhin werden die Greif- oder Spannmittel des zweiten Greifkopfes 8B gegen die das rechtsseitige Werkstückende WB umfassende Endzone des Werkstücks W herangefahren und mit ihr verspannt. Der Greifkopf 8B samt dem Werkstück W wird sodann mittels der rechten Erfassungseinrichtung 2B entlang der Bearbeitungsstrecke WP nach rechts verfahren. Hierzu ist ein geeigneter Antrieb vorgesehen. Während dessen bleiben die Greifmittel der linken Erfassungseinrichtung 2A geöffnet, so dass das Werkstück mehr oder weniger ungehindert durch die linke Erfassungseinrichtung 2A hindurch geführt werden kann.

Aus Figur 3A ist ersichtlich, dass der Greifkopf 8B sich in kraftschlüssiger Verbindung zum Werkstück W befindet und entlang der Führungsschiene 4B bereits so weit nach rechts verschoben ist, wie die Werkstücklänge es erfordert, um an ihrer linksseitigen Endzone (WA) von dem Greifkopf 8A nachfolgend ebenfalls eingespannt werden zu können, wie in Figur 3B für Richtvorgänge dargestellt. Die Greifköpfe 8A/8B sind um die Werkstücklängsachse drehbar, so dass das Werkstück in gewohnter Weise vermessen und biegegerichtet werden kann. Hierzu verfährt das Pressengestell 1 entlang der Bearbeitungsstrecke WP, um in alle erforderlichen Biegerichtpositionen entlang des Werkstücks zu gelangen. Für das nach beendeter Bearbeitung des Werkstücks W erforderliche Hinausschieben des Werkstücks W aus der Bearbeitungsstrecke WP, kann das Werkstück W entweder in die in Figur 2A/B gezeigte Ursprungsposition zurückgeschoben oder in entgegensetzter Richtung auf den gegenüber liegenden Rollgang 3B vorgeschoben werden, wie in Figuren 3C dargestellt. Hierzu verfährt die entsprechende Erfassungseinrichtung den Greifkopf (im Ausführungsbeispiel die linke) entlang der Bearbeitungsstrecke WP bei geschlossenem Greifkopf 8A und geöffnetem Greifkopf 8B nach rechts.

Um mit dem Greifkopf hinderlichen Konturen des Pressengestells 1, z. B. den Richtambossen oder dem Richtkopf, auszuweichen, kann es erforderlich sein, dass das Werkstück W, beispielsweise entlang der vertikalen Richtungspfeile 45, angehoben und/oder abgesenkt wird. Alternativ oder zusätzlich können auch die Ambosse 1 B, 1C und/oder der Richtkopf 1A insbesondere in vertikaler Richtung so bewegt werden, dass ein Hinein- oder Herausfördern des Werkstücks W oder Hindurchfahren zumindest eines Greifkopfes möglich ist.

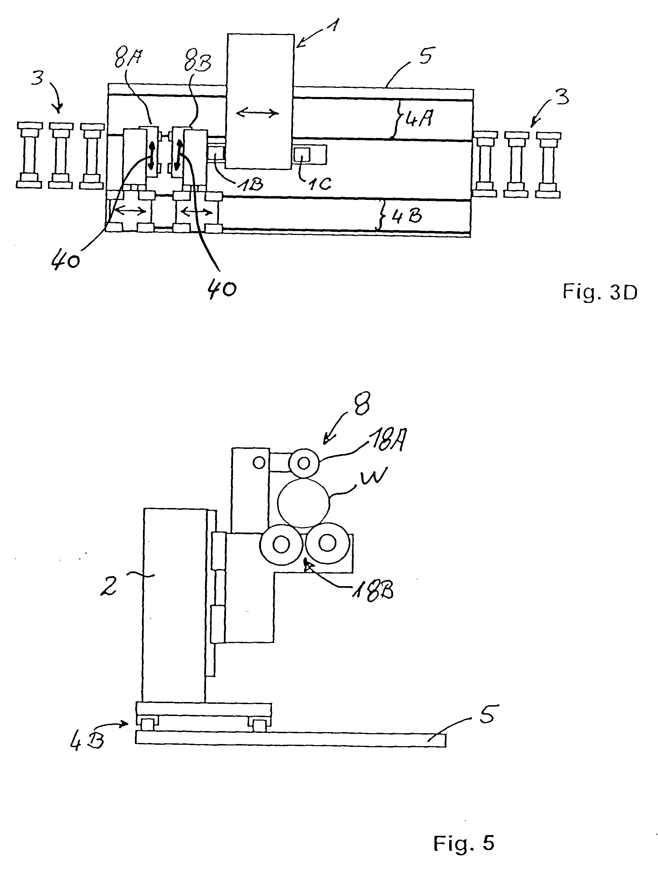

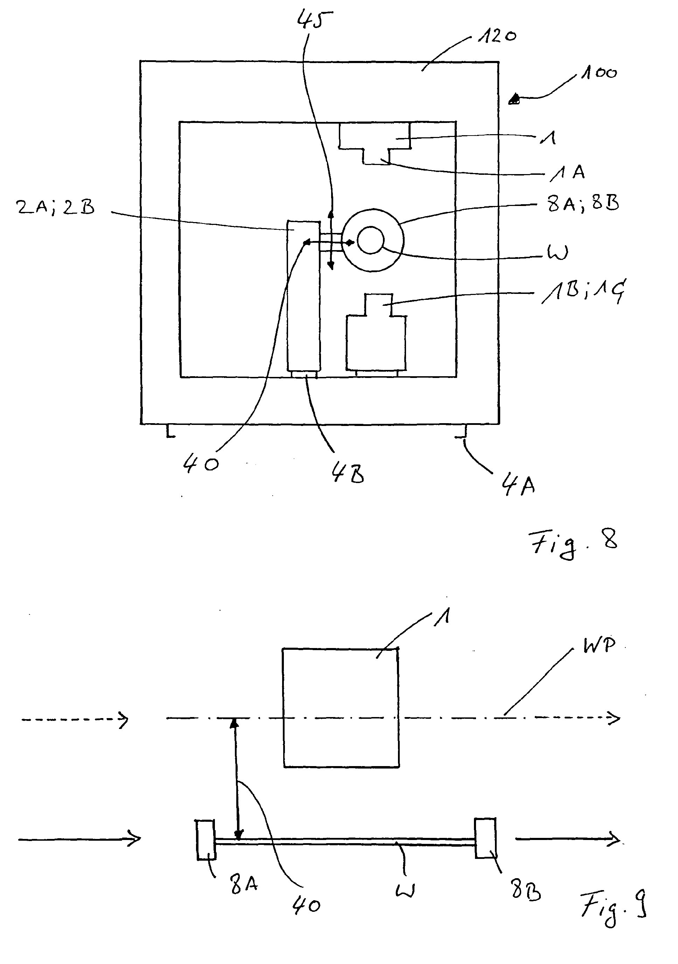

Eine Draufsicht auf eine Biegerichtmaschine, insbesondere gemäß der Figuren 3A bis 3C, ist aus Figur 3D ersichtlich. Um etwa beim Hinein- oder Herausfördern oder beim Positionieren respektive Zentrieren des Werkstücks W den Konturen des Pressengestells 1 mit seinen Komponenten wie etwa dem Richtkopf 1A und/oder den Richtambossen 1 B, 1C ausweichen zu können, kann es zweckmäßig sein, wenn die Greifköpfe 8A, 8B respektive die Erfassungseinrichtungen 2A, 2B in horizontaler Richtung gemäß der Richtungspfeile 40 quer zur Bearbeitungsstrecke WP bewegbar sind. Eine Bewegbarkeit der Greifköpfe 8A, 8B respektive der Erfassungseinrichtungen 2A, 2B in sämtlichen Raumrichtungen, insbesondere in vertikaler Richtung (Höhenverstellbarkeit), in axialer Richtung (WP) und/oder in horizontaler Richtung entlang der Richtungspfeile 40 (wie z. B. gemäß Figur 9), d.h. im Wesentlichen senkrecht zu den Führungsschienen 4A, 4B sowie rotartorisch um das Drehzentrum des Greifkopfes 8A, 8B dient auch der für die Biegebearbeitung erforderlichen Zentrierung des Werkstücks W in der Vorrichtung (100).

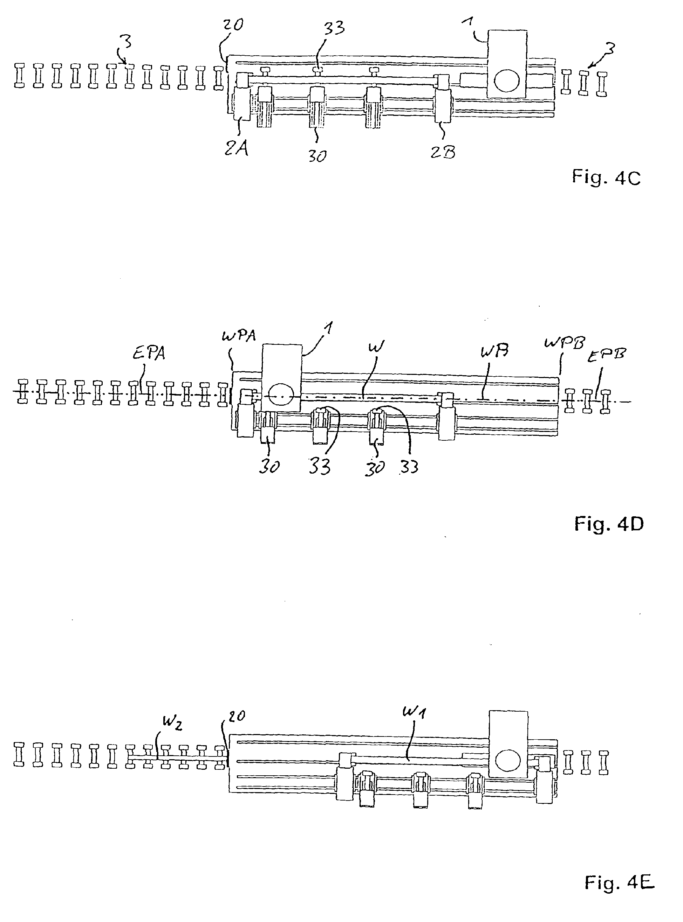

Die Transportsequenz nach Figuren 4A - 4E verdeutlichen die Horizontalförderung des langen Werkstücks in einer alternativen Ausführungsform: Figur 4A zeigt eine Situation der Zuförderung eines langen Werkstücks W einschließlich dessen Längenvermessung. Entsprechend dem Ergebnis der Längenmessung wird, wie in Figur 4B dargestellt, die Position von zwei oder mehr zwischen den Erfassungseinrichtungen 2A/B gelegenen Rollenböcken 30 entlang der Führungsschiene 4B der Werkstücklänge angepasst. Die zu den Rollenböcken 30 zugehörenden Horizontalstützmittel 33, können grundsätzlich auch als Stützrollen ausgebildet sein, wie sie auch für den Rollgang 3A/3B verwendet werden. Aus Figur 4C ist ersichtlich, wie bei geöffneter Sperre 20 das lange Werkstück W von den Horizontalstützmitteln 33 gestützt in die Erfassungsposition der Greifköpfe verlagert ist. Nachfolgend werden die Horizontalstützmittel 33 aus ihrer Position unterhalb der Bearbeitungsstrecke WP in eine in Figur 4D gezeigte Position zurückgezogen. Daraufhin kann die Bearbeitung des langen Werkstücks W in verschiedenen Bearbeitungspositionen, wie mit einer Biegerichtmaschine, erfolgen, während das lange Werkstück an seinen Endbereichen von den Greifköpfen 8A und 8B temporär eingespannt ist. Aus Figur 4E ist ersichtlich, dass nach erfolgter Bearbeitung des langen Werkstücks dieses zusammen mit den Rollenböcken (30) und den Erfassungseinrichtungen 2A/B insgesamt (in der Zeichnung nach rechts) verlagert werden kann. Beim nachfolgenden Abtransport über einen Rollengang 3B kann die Werkstückabstützung über die wieder unter die Bearbeitungsstrecke WP verlagerten Horizontalstützmittel 33 erfolgen. Ein noch unbearbeitetes langes Werkstück unterschiedlicher Länge und/oder unterschiedlichen Querschnitts ist in dieser Darstellung bereits durch den Rollengang 3A bis zu einer Sperre 20 für den nächsten Bearbeitungszyklus vorgefahren. Die Vortriebsbewegung des Werkstücks kann entweder durch Drehantriebe an den Rollen und/oder wiederum durch den Greifkopf erfolgen.

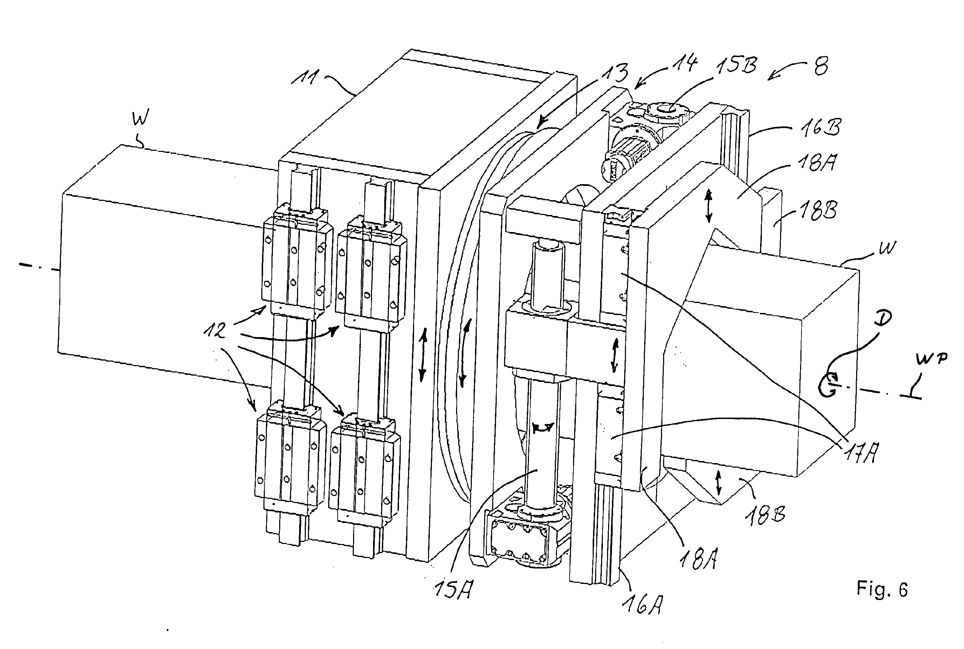

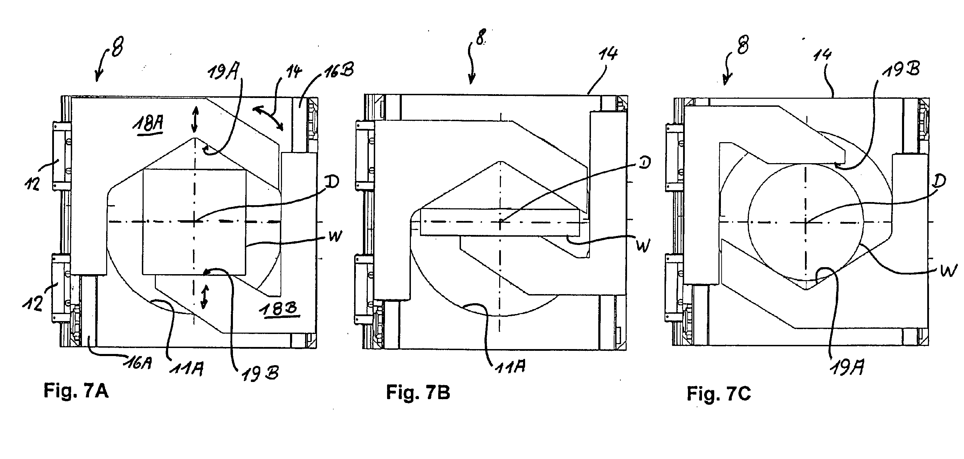

Wie aus Figur 5 ersichtlich, kann als Greifkopf eine Dreipunktlagerung mittels Rollen dienen, wie sie in der Baureihe ASV-L von MAE bereits verwendet werden. Bevorzugt werden aber neuartige Greifköpfe wie sie in Figuren 6 und 7 dargestellt sind und nachfolgend beschrieben werden.

Figuren 6 und 7A-C zeigen einen Greifkopf 8 nach Art eines Zweibacken-Spannfutters. Ein Grundgehäuse 11 ist über vertikal bewegliche Führungswaagen 12 an den aus Figuren 1 bis 4 bekannten Erfassungseinrichtungen 2A, 2B befestigt und diesem gegenüber höhenverstellbar. Das Grundgehäuse 11 weist eine großflächige Mittenausnehmung 11 A zum Hindurchschieben von zu bearbeitenden Werkstücken W auf. An seiner der Bearbeitungsstrecke WP zugewandten Seite schließt sich an das Grundgehäuse 11 ein Drehkranz 13 an, welcher einen in seiner Umfangsrichtung um 360° um ein Drehzentrum D drehbaren Drehkopf 14 trägt. Der Drehkranz 13 ist zum zumindest abschnittsweisen Hindurchführen des Werkstücks W insofern geeignet, als er umfangsseitig ein im Wesentlichen geschlossenes, ringartiges Bauteil umfasst, mittig jedoch zumindest eine Öffnung oder einen veränderbaren Durchlass. Die Drehung zwischen Grundgehäuse 11 und Drehkopf 14 erfolgt über eine umlaufende Verzahnung und einen Getriebemotor (nicht dargestellt), wobei sich der Drehkopf 14 relativ zum Grundgehäuse 11 um 360° oder auch endlos drehen kann. Der Drehkopf 14 nimmt zwei motorisch angetriebene Spindeln 15A, 15B in seitlicher und im vorliegenden und insoweit bevorzugten Fall nicht zentrischen Ausrichtung auf. Jede der beiden Spindeln ist mit einer von zwei einander gegenüberliegenden Spannbacken 18A, 18B verbunden, die entlang von Führungsschienen 16A, 16B und mit Führungswagen 17A, 17B unabhängig voneinander einstellbar sind. Die Führungsschienen 16A, 16B können auf einer der Seiten des Werkstücks W angeordnet sein oder (wie dargestellt) auf verschiedenen Seiten. Die Spannbacken fixieren das Werkstück W, das durch die offene Konstruktion zum Be- und Entladen in axialer Richtung kollisionsfrei durch das Spannfutter hindurch fahren kann. Mittels der Spannbacken 18A, 18B ist das Werkstück W mit seiner fiktiven Werkstückachse, die in der Bearbeitungsstrecke WP zu liegen kommen soll, von einer Spannposition in eine Bearbeitungsposition zentrierbar. Das Drehzentrum D (d. h. seine Drehachse) des Greifkopfes fällt dann mit der fiktiven oder tatsächlichen Werkstückachse zusammen. Greifköpfe mit Merkmalen der vorbezeichneten Art sind von eigenständig erfinderischer Bedeutung.

Wie aus Figuren 7A-C ersichtlich, ist mit ein und demselben Spannbackenpaar das Spannen runder, quadratischer, rechteckiger aber auch anderer polygonen Querschnittsformen des Werkstücks möglich. Ohne manuellen Eingriff wird ein großer Spannbereich abgedeckt, so etwa runde und quadratische Stäbe im Abmessungsbereich 120 bis 150 mm oder rechteckige bis 120 x 600 mm. Die unabhängige Verstellbarkeit von Ober- und Unterbacke gleicht die unterschiedlichen Backengeometrien 19A, 19B (oben prismatisch und unten gerade) und Werkstückquerschnitte aus. Spannbacken mit Merkmalen der vorbezeichneten Art sind von eigenständig erfinderischer Bedeutung.

In den Figuren sind zwar die Greifköpfe mit je zwei von einander verschiedenen Spannbacken dargestellt; es ist aber auch möglich, statt dessen drei oder mehr von einander verschiedenen Spannbacken zu verwenden, ohne das erfinderische Konzept zu verlassen.

Bei Rundstäben wird zur besseren Zentrierung die prismatische Backe nach unten gedreht. Besonders vorteilhaft ist die freie Drehbarkeit. So können Rundstäbe rotierend vermessen werden und Formfehler sind so besser ausfilterbar. Die Rundlauffehler-Vektoren an Rundstäben können exakt nach oben positioniert werden, so dass der Richtvorgang optimal abläuft.

Eine stirnseitige und schematische Ansicht einer Biegerichtmaschine 100 mit geschlossenem Maschinengestell 120 kann der Figur 8 entnommen werden. Innerhalb des Gestells 120 ist eine Führungsschiene 4B angeordnet, entlang derer die Greifköpfe 8A, 8B und/oder die Erfassungseinrichtungen 2A, 2B verfahrbar sind. Um insbesondere den Konturen der Ambosse 1B, 1C und/oder des Richtkopfes 1A auszuweichen, sind die Greifköpfe 8A, 8B entlang der Richtungspfeile 40, 45 vertikal, d. h. in der Höhe und/oder horizontal, d.h. im Wesentlichen senkrecht zur Wirkungslinie des Richtkopfes 1A innerhalb des Gestells 120 verfahrbar.

Eine schematische und stark vereinfachte Darstellung einer Ansicht auf eine vorzugsweise zu einer Seite offene Biegerichtmaschine 100 kann der Figur 9 entnommen werden, wobei das Gestell der Maschine im Profil eine etwa C-förmige Gestalt haben kann. Das Hineinführen des Werkstücks W kann entlang der Bearbeitungsstrecke WP erfolgen. Dies entspricht einem Weg entlang der gestrichelten Linie. Alternativ kann das Werkstück entlang dem Weg gemäß der durchgezogenen Linie in Figur 9 zunächst parallel zu der Bearbeitungsstrecke vor dem Pressengestell 1 angeordnet werden (d. h. vor der Öffnung des C-förmige Gestells), bevor es dann entlang des Richtungspfeils 40 in die Bearbeitungsposition verfahren wird, so dass seine Position nach dieser horizontalen Bewegung mit der Bearbeitungsstrecke WP übereinstimmt. Kollisionen der Greifköpfe 8A, 8B mit den Ambossen oder dem Richtkopf können so vermieden werden.

**BEZUGSZEICHENLISTE**

| | | | |
|---|---|---|---|
| 1 | Pressengestell | 17B | Führungswagen |
| 1A | Richtkopf | 18A | Spannbacke |
| 1B | Richtamboss | 18B | Spannbacke |
| 1C | Richtamboss | 19A | prismatische Backengeometrie |
| 2A | Erfassungseinrichtung | 19B | gerade Backengeometrie |
| 2B | Erfassungseinrichtung | 20 | Sperre |
| 3 | Horizontalfördermittel | 30 | Rollenböcke |
| 3A | Rollgang | 33 | Horizontalstützmittel |
| 3B | Rollgang | 40 | horizontaler Richtungspfeil |
| 4 | Führungsschienen | 45 | vertikaler Richtungspfeil |
| 4A/B | Führungsschienen | 100 | Biegerichtmaschine |
| 5 | Maschinenbasis | 120 | Maschinengestell |
| 8 | Greifkopf | | |
| 8A | Greifkopf | D | Drehzentrum |
| 8B | Greifkopf | EPA | Verlängerung |
| 11 | Grundgehäuse | EPB | Verlängerung |
| 11A | Mittenausnehmung | W | Werkstück |
| 12 | Führungswaagen | WA | Werkstückende |
| 13 | Drehkranz | WB | Werkstückende |
| 14 | Drehkopf | WP | Bearbeitungsstrecke |
| 15A | Spindel | WPA | Kopfende der Bearbeitungsstrecke |
| 15B | Spindel | | |
| 16A | Führungsschiene | WPB | Kopfende der Bearbeitungsstrecke |
| 16B | Führungsschiene | | |
| 17A | Führungswagen | | |

## Patentansprüche

1. Greifkopf für Erfassungseinrichtungen zumindest zum Manipulieren durch Drehen eines langen Werkstückes (W) in horizontaler Anordnung, insbesondere an dessen Endbereichen,
wobei
der Greifkopf (8;.8A, 8B) zwei voneinander unabhängig verstellbare, um ein Drehzentrum (D) des Greifkopfes drehbare Spannbacken (18A, 18B) aufweist, **dadurch gekennzeichnet**
**dass** der Greifkopf (8;.8A, 8B) seitlich, an dem zu spannenden langen Werkstück (W) vorbei verlaufende Führungsschienen (16A, 16B) für die Spannbacken (18A, 18B) aufweist.

2. Greifkopf nach Anspruch 1, **dadurch gekennzeichnet, dass** die Führungsschienen (16A, 16B) auf unterschiedlichen Seiten an den zu spannenden langen Werkstück (W) vorbei verlaufen.

3. Greifkopf nach Anspruch 1 oder 2, **dadurch gekennzeichnet, dass** die Spanngeometrien der beiden Spannbacken (18A, 18B) sich voneinander unterscheiden.

4. Greifkopf nach einem der Ansprüche 1 bis 3, **dadurch gekennzeichnet, dass** die eine Spannbacke (18A) eine prismatische Spanngeometrie (19A) und die andere Spannbacke (18B) eine ebene Spanngeometrie (19B) aufweist.

5. Greifkopf nach einem der Ansprüche 1 bis 4, **dadurch gekennzeichnet, dass** ein die Spannbacken (18A, 18B) tragender Drehkopf (14) über einen innen hohlen, insbesondere zum zumindest abschnittsweisen Hindurchführen des Werkstücks (W) geeigneten Drehkranz (13) an ein innen hohles Grundgehäuse (11) angeschlossen ist.

6. Greifkopf nach einem der Ansprüche 1 bis 5, **dadurch gekennzeichnet, dass** der Greifkopf (8; 8A, 8B), insbesondere mittels mindestens einen Führungswagens (12), an einer Erfassungseinrichtung (2A, 2B) für die Enden (WA, WB) des langen Werkstücks (W) höhenverstellbar ist.

7. Greifkopf nach einem der Ansprüche 1 bis 6, **dadurch gekennzeichnet, dass** der Greifkopf an die Höhe des Werkstückzentrums relativ zu mindestens einen Horizontalfördermittel (3) oder das mindestens eine Horizontalfördermittel (3) relativ zum Greifkopf an die Höhe des Werkstückzentrums anpassbar ist.

8. Greifkopf nach einem der Ansprüche 1 bis 7, **dadurch gekennzeichnet, dass** er während eines Bearbeitungsschritts an dem langen Werkstück (W), den ergriffenen Werkstückende (WA, WB) folgend, zwängungsfrei verlagerbar ist.

9. Greifkopf nach einem der Ansprüche 1 bis 8, **gekennzeichnet durch** einen Antrieb zum Verfahren mindestens eines Greifkopfes bei eingespanntem Werkstück zur Verlagerung desselben entlang einer Bearbeitungsstrecke (WP) einer Bearbeitungsmaschine für das lange Werkstück (W).

10. Zu- und Abführvorrichtung für lange Werkstücke (W) in eine und aus einer Bearbeitungsmaschine, wie einer Biegerichtmaschine, bei der das in den Bearbeitungspositionen sich befindende lange Werkstück (W) eine Bearbeitungsstrecke (WP) definiert und das lange Werkstück (W) an seinen beiden Enden temporär von je einer Erfassungseinrichtung (2A, 2B) getragen wird,
**dadurch gekennzeichnet, dass**
ein Greifkopf nach einem der Ansprüche 1 bis 8 vorgesehen ist und dass in gerader Verlängerung (EPA, EPB) der Bearbeitungsstrecke (WP) sich an mindestens einem Kopfende (WPA, WPB) der Bearbeitungsstrecke (WP) ein Horizontalfördermittel (3) für das lange Werkstück (W) anschließt, und zumindest eine der Erfassungseinrichtungen (2A,2B) einen Greifkopf (8A,8B) zum kraftschlüssigen Ergreifen eines Endbereiches des von dem Horizontalfördermittel herbei geförderten Werkstücks (W) sowie Antriebsmittel zum Hereinziehen des ungerichteten Werkstücks (W) in die Bearbeitungsstrecke (WP) und zum Hinausschieben des gerichteten Werkstücks auf das mindestens eine Horizontalfördermittel, insbesondere mittels des Greifkopfes aufweist.

11. Zu- und Abführvorrichtung für lange Werkstücke (W) in eine und aus einer Bearbeitungsmaschine, wie einer Biegerichtmaschine, bei der das in den Bearbeitungspositionen sich befindende lange Werkstück (W) eine Bearbeitungsstrecke (WP) definiert und das lange Werkstück (W) an seinen beiden Enden temporär von je einer Erfassungseinrichtung (2A, 2B) getragen wird, insbesondere mit einem ,
**dadurch gekennzeichnet, dass**
ein Greifkopf nach einem der Ansprüche 1 bis 9 vorgesehen ist, und dass in gerader Verlängerung (EPA, EPB) der Bearbeitungsstrecke (WP) sich an mindestens einem Kopfende (WPA, WPB) der Bearbeitungsstrecke (WP) ein Horizontalfördermittel (3) für das lange Werkstück (W) anschließt, und zumindest eine der Erfassungseinrichtungen (2A,2B) einen Greifkopf (8A,8B) zum kraftschlüssigen Ergreifen eines Endbereiches des von dem Horizontalfördermittel herbei geförderten Werkstücks (W) sowie zwischen den beiden Erfassungseinrichtungen (2A, 2B) angeordnete, parallel zu diesen verfahrbaren Rollenböcken (30) mit wahlweise unter die Bearbeitungsstrecke (WP) verlagerbaren Horizontalstützmitteln (33) für das Zu- und Abführen des langen Werkstücks (W).

12. Verfahren zum Biegerichten von langen Werkstücken mittels einer längs des Werkstücks (W) verfahrbaren Presseneinheit, bei dem zwischen den Biegerichtschritten, welche in verschiedenen Positionen an dem langen Werkstück durchgeführt werden, das lange Werkstück an seinen Endereichen höhenund abstandsveränderlichen, einen Greifkopf aufweisenden Erfassungseinrichtungen abgestützt und ggf. um eine horizontale Drehachse gedreht wird,
**dadurch gekennzeichnet, dass**
das lange Werkstück mit einem in der Verlängerung der Bearbeitungsstrecke sich erstreckenden Horizontalfördermittel bis zum Beginn oder in die Nähe des Beginns der Bearbeitungsstrecke horizontal verfahren,
durch den Greifkopf einer ersten Erfassungseinrichtung hindurch und bis zu einer daneben liegenden zweiten Erfassungseinrichtung vorgeschoben,
von dem Greifkopf der zweiten Erfassungseinrichtung kraftschlüssig im Bereich des voreilenden Werkstücksendes ergriffen wird,
mittels des zweiten Greifkopfes entlang von parallel zur Bearbeitungsstrecke angeordneten Führungen von der zugehörenden Erfassungseinrichtung in die Bearbeitungsstrecke herein gezogen wird und
nach abgeschlossener Bearbeitung auf ein dem zuführenden Horizontalfördermittel gegenüberliegendes abführendes Horizontalfördermittel in gerader Verlängerung der Bearbeitungsstrecke aus der Bearbeitungsstrecke heraus mittels dem Greifkopf der ersten Erfassungseinrichtung verschoben wird.

## Claims

1. A gripper head for acquisition devices, at least for purposes of manipulation by rotation of a long workpiece (W) in an horizontal arrangement, in particular at its end regions, wherein the gripper head (8; 8A, 8B) has two clamping jaws (18A, 18B) that can be adjusted independently of one another, and that can rotate about a centre of rotation (D) of the gripper head,
**characterised in that**,
the gripper head (8; 8A, 8B) laterally has guide rails (16A, 16B) for the clamping jaws (18A, 18B), running past the long workpiece (W) that is to be clamped.

2. The gripper head in accordance with Claim 1, **characterised in that**, the guide rails (16A, 16B) run past the long workpiece (W) that is to be clamped on different sides.

3. The gripper head in accordance with Claim 1 or 2, **characterised in that**, the clamping geometries of the two clamping jaws (18A, 18B) differ from one another.

4. The gripper head in accordance with one of the Claims 1 to 3, **characterised in that**, the one clamping jaw (18A) has a prismatic clamping geometry (19A) and the other clamping jaw (18B) has a planar clamping geometry (19B).

5. The gripper head in accordance with one of the Claims 1 to 4, **characterised in that**, a rotary head (14) carrying the clamping jaws (18A, 18B) is connected, via an internally hollow rotary mounting (13), suitable in particular for purposes of feeding through at least some sections of the workpiece (W), to an internally hollow basic housing (11).

6. The gripper head in accordance with one of the Claims 1 to 5, **characterised in that**, the height of the gripper head (8; 8A, 8B) can be adjusted, in particular by means of at least one guide carriage (12), on an acquisition device (2A, 2B) for the ends (WA, WB) of the long workpiece (W).

7. The gripper head in accordance with one of the Claims 1 to 6, **characterised in that**, the gripper head can be matched to the height of the centre of the workpiece relative to at least one horizontal means of conveyance (3), or the at least one horizontal means of conveyance (3) can be matched to the height of the centre of the workpiece relative to the gripper head.

8. The gripper head in accordance with one of the Claims 1 to 7, **characterised in that**, during a processing step on the long workpiece (W) it can be relocated in an unrestricted manner, tracking the gripped workpiece end (WA, WB).

9. The gripper head in accordance with one of the Claims 1 to 8, **characterised by** a drive for purposes of traversing at least one gripper head, with a clamped workpiece, for purposes of relocating the same along a processing section (WP) of a processing machine for the long workpiece (W).

10. A device for feeding long workpieces (W) into, and removing them from, a processing machine, such as a bend-straightening machine, in which the long workpiece (W), located in the processing positions, defines a processing section (WP), and at each of its two ends is temporarily supported by an acquisition device (2A, 2B),
**characterised in that**,
a gripper head is provided in accordance with one of the Claims 1 to 8, and **in that**, in the straight extension (EPA, EPB) of the processing section (WP) a horizontal means of conveyance (3) for the long workpiece (W) connects to at least one head end (WPA, WPB) of the processing section (WP), and at least one of the acquisition devices (2A, 2B) has a gripper head (8A, 8B) for purposes of gripping onto an end region of the workpiece (W) in a force-fit, the latter being fed past by the horizontal means of conveyance, together with drive means for purposes of pulling the unstraightened workpiece (W) into the processing section (WP), and for purposes of sliding the straightened workpiece out onto the at least one horizontal means of conveyance, in particular by means of the gripper head.

11. A device for feeding long workpieces (W) into, and removing them from, a processing machine, such as a bend-straightening machine, in which the long workpiece (W), located in the processing positions, defines a processing section (WP) and the long workpiece (W) at each of its two ends is temporarily supported by an acquisition device (2A, 2B), in particular by one,
**characterised in that**,
a gripper head is provided in accordance with one of the Claims 1 to 9, and **in that**, in the straight extension (EPA, EPB) of the processing section (WP) a horizontal conveyance means (3) for the long workpiece (W) connects to at least one head end (WPA, WPB) of the processing section (WP), and at least one of the acquisition devices (2A, 2B) has a gripper head (8A, 8B) for purposes of gripping onto an end region of the workpiece (W) in a force-fit, the latter being fed past by the horizontal means of conveyance, together with roller blocks (30) arranged between the two acquisition devices (2A, 2B), which can be traversed parallel to the latter, optionally with horizontal means of support (33) that can be relocated under the processing section (WP) for the feeding in and removal of the long workpiece (W).

12. A method for the bend-straightening of long workpieces by means of a press unit that can be traversed along the workpiece (W), in which, between the bend-straightening steps that are executed in various positions on the long workpiece, the long workpiece is supported at its end regions by acquisition devices that can be altered in height and separation distance, having gripper heads, and rotated as necessary about a horizontal axis of rotation,
**characterised in that**,
the long workpiece is traversed horizontally with a horizontal means of conveyance extending in the extension of the processing section up to the start or the vicinity of the start of the processing section,
is pushed forward through the gripper head of a first acquisition device and up to a second acquisition device located beside it,
is gripped in a force-fit by the gripper head of the second acquisition device in the region of the advanced workpiece end,
by means of the second gripper head is pulled along guides arranged parallel to the processing section by the related acquisition device into the processing section, and
when processing is complete, is pushed out of the processing section by means of the gripper head of the first acquisition device onto a removal horizontal means of conveyance in a straight extension of the processing section, located opposite to the feed-in horizontal means of conveyance.

## Revendications

1. Tête de prise pour dispositifs de prise au moins pour la manipulation par rotation d'une pièce allongée (W) agencée horizontalement, en particulier sur ses extrémités, sachant que la tête de prise (8 ; 8A, 8B) présente deux mâchoires de serrage (18A, 18B) mobiles indépendamment l'une de l'autre, rotatives sur un centre de rotation (D) de la tête de prise,
**caractérisée en ce que**
la tête de prise (8 ; 8A, 8B) présente des rails de guidage (16A, 16B) latéraux passant devant la pièce allongée (W) à serrer, pour les mâchoires de serrage (18A, 18B).

2. Tête de prise selon la revendication 1, **caractérisée en ce que** les rails de guidage (16A, 16B) passent sur différents côtés de la pièce allongée (W) à serrer.

3. Tête de prise selon la revendication 1 ou 2, **caractérisée en ce que** les géométries de serrage des deux mâchoires de serrage (18A, 18B) se différencient entre elles.

4. Tête de serrage selon l'une des revendications 1 à 3, **caractérisée en ce que** l'une mâchoire de serrage (18A) présente une géométrie de serrage prismatique (19A) et l'autre mâchoire de serrage (18B) présente une géométrie de serrage plane (19B).

5. Tête de serrage selon l'une des revendications 1 à 4, **caractérisée en ce qu'**une tête rotative (14) supportant les mâchoires de serrage (18A, 18B) est raccordée à un boîtier de base creux (11) par une couronne d'orientation (13) creuse, appropriée en particulier pour traverser la pièce (W) au moins par tronçons.

6. Tête de serrage selon l'une des revendications 1 à 5, **caractérisée en ce que** la tête de prise (8 ; 8A, 8B) est réglable en hauteur, en particulier au moyen d'au moins un chariot de guidage (12), sur un dispositif de prise (2A, 2B) pour les extrémités (WA, WB) de la pièce allongée (W).

7. Tête de serrage selon l'une des revendications 1 à 6, **caractérisée en ce que** la tête de prise peut être adaptée à la hauteur du centre de la pièce par rapport à au moins un moyen de transport horizontal (3) ou que l'au moins un moyen de transport horizontal (3) peut être adapté à la hauteur du centre de la pièce par rapport à la tête de prise.

8. Tête de serrage selon l'une des revendications 1 à 7, **caractérisée en ce qu'**elle peut être déplacée sans être forcée, pendant une étape d'usinage sur la pièce allongée (W), en suivant l'extrémité prise de la pièce (WA, WB).

9. Tête de serrage selon l'une des revendications 1 à 8, **caractérisée par** un entraînement pour déplacer au moins une tête de prise lorsque la pièce est serrée pour déplacer celle-ci le long d'un trajet d'usinage (WP) d'une machine d'usinage pour la pièce allongée (W).

10. Dispositif d'amenée et d'évacuation pour des pièces allongées (W) dans une, et hors d'une, machine d'usinage, comme une machine à dresser, dans lequel la pièce allongée (W) se trouvant dans les positions d'usinage définit un trajet d'usinage (WP) et la pièce allongée (W) est supportée sur ses deux extrémités de façon temporaire par un dispositif de prise respectif (2A, 2B),
**caractérisé en ce**
**qu'**une tête de prise selon l'une des revendications 1 à 8 est prévue, et que dans un prolongement en ligne droite (EPA, EPB) du trajet d'usinage (WP), un moyen de transport horizontal (3) pour la pièce allongée (W) se raccorde sur au moins une extrémité avant (WPA, WPB) du trajet d'usinage (WP), et au moins un des dispositifs de prise (2A, 2B) présente une tête de prise (8A, 8B) pour saisir par adhérence des forces une partie d'extrémité de la pièce (W) transportée devant par le moyen de transport horizontal ainsi que des moyens d'entraînement pour faire entrer la pièce (W) non dressée dans le trajet d'usinage (WP) et pour pousser la pièce dressée sur l'au moins un moyen de transport horizontal, en particulier au moyen de la tête de prise.

11. Dispositif d'amenée et d'évacuation pour des pièces allongées (W) dans une, et hors d'une, machine d'usinage, comme une machine à dresser, dans lequel la pièce allongée (W) se trouvant dans les positions d'usinage définit un trajet d'usinage (WP) et la pièce allongée (W) est supportée sur ses deux extrémités de façon temporaire par un dispositif de prise respectif
(2A, 2B),
**caractérisé en ce**
**qu'**une tête de prise selon l'une des revendications 1 à 9 est prévue, et que dans un prolongement en ligne droite (EPA, EPB) du trajet d'usinage (WP), un moyen de transport horizontal (3) pour la pièce allongée (W) se raccorde sur au moins une extrémité avant (WPA, WPB) du trajet d'usinage (WP), et au moins un des dispositifs de prise (2A, 2B), présente une tête de prise (8A, 8B) pour saisir par adhérence des forces une partie d'extrémité de la pièce (W) transportée devant par le moyen de transport horizontal, ainsi que des supports à galet (30) disposés entre les deux dispositifs de prise (2A, 2B), pouvant être déplacés parallèlement à ceux-ci, comprenant des moyens d'appui horizontal (33) pouvant être déplacés au choix sous le trajet d'usinage (WP) pour amener et évacuer la pièce allongée (W).

12. Procédé pour redresser des pièces allongées au moyen d'une unité de pressage pouvant être déplacée le long de la pièce (W), dans lequel, entre les étapes de dressage, exécutées en différentes positions sur la pièce allongée, la pièce longue est appuyée sur ses zones d'extrémité par des dispositifs de prise présentant une tête de prise, modifiables en hauteur et en distance, et est tournée le cas échéant sur un pivot horizontal,
**caractérisé en ce que**
la pièce longue est déplacée horizontalement avec un moyen de transport horizontal s'étendant dans le prolongement du trajet d'usinage jusqu'au début ou à proximité du début du trajet d'usinage,
est avancée à travers la tête de prise d'un premier dispositif de prise et jusqu'à un second dispositif de prise placé à côté,
est prise, par adhérence des forces, par la tête de prise du second dispositif de prise, au niveau de l'extrémité de pièce en avancée,
est amenée dans le trajet d'usinage au moyen de la seconde tête de prise le long de guides disposés parallèlement au trajet d'usinage par le dispositif de prise correspondant,
une fois l'usinage terminé, est avancée sur un moyen de transport horizontal d'évacuation opposé au moyen de transport horizontal d'amenée dans le prolongement en ligne droite du trajet d'usinage hors du trajet d'usinage, au moyen de la tête de prise du premier dispositif de prise.
